# EUROPÄISCHE PATENTSCHRIFT

(11) **EP 0 630 620 B1**
(45) Veröffentlichungstag und Bekanntmachung des Hinweises auf die Patenterteilung: **05.11.1997**
(21) Anmeldenummer: 94108816.3
(22) Anmeldetag: 08.06.1994
(51) Int. Cl.: A61C 1/05

(54) **Zahnärztlicher Turbinenantrieb mit Mitteln zur selbsttätigen Drehzahlregelung**
Medical turbine drive with selfregulating revolving speed
Moteur à turbine medical avec mécanisme d'autorégulation de la vitesse de rotation

(30) Priorität: 21.06.1993 DE 4320532
(43) Veröffentlichungstag der Anmeldung: 28.12.1994
(73) Patentinhaber: SIEMENS AKTIENGESELLSCHAFT, 80333 München (DE)
(72) Erfinder: Wohlgemuth, Jürgen, D-64283 Darmstadt (DE)

(56) Entgegenhaltungen:
- EP-A- 0 283 417
- EP-A- 0 497 139
- EP-A- 0 549 910
- US-A- 3 386 702
- US-A- 3 865 505
- US-A- 4 723 911
- US-A- 4 744 752

## Beschreibung

Die Erfindung bezieht sich auf einen zahnärztlichen Turbinenantrieb, der ein in Lagern geführtes Laufrad enthält, welches am Umfang eine Vielzahl von Turbinenschaufeln aufweist, die nach dem bekannten Freistrahlprinzip über eine Düse mit Druckluft beaufschlagbar sind und der im Strömungsweg der Abluft ein Stellmittel zur Regelung der Turbinendrehzahl aufweist.

Turbinenantriebe werden bei zahnärztlichen Turbinenhandstücken seit langem eingesetzt und zeichnen sich gegenüber anderen Antrieben durch einen relativ einfachen Aufbau sowie eine vergleichsweise einfache Versorgung aus. Allerdings sind sie mit dem Nachteil einer relativ geringen Abtragleistung und einer in der Regel zu hohen Leerlaufdrehzahl (bis maximal 400.000 Upm), die bei Belastung durch ein äußeres Moment abrupt stark absinkt, behaftet. Ebenfalls Folge der zu hohen Drehzahl ist ein relativ hoher Verschleiß der Lager (Gleit- oder Kugellager). Außerdem besteht die Gefahr, daß das abgetragene Material (Zahnsubstanz) bei der relativ hohen Drehzahl unzulässig stark erwärmt wird oder gar verbrennt.

Aus der DE-PS 845 092 ist ein zahnärzlicher Turbinenantrieb bekannt, bei dem man durch Änderung des Querschnitts von Auslaßöffnungen für die von der Turbine abströmende Druckluft die Drehzahl der Turbine verändern kann. Der Auslaßkanal wird dabei durch zwei konzentrisch zueinander angeordnete zylindrische Teile gebildet, welche beide am Umfang mehrere Öffnungen aufweisen. Eine Querschnittsveränderung der Auslaßöffnungen wird durch Verschieben des äußeren zylindrischen Teiles erzielt.Die Öffnungen der beiden zylindrischen Teile werden dadurch mehr oder weniger stark zur Deckung gebracht. Das Verschieben des äußeren zylindrischen Teils erfolgt von Hand mittels eines Hebels, der sich längsseits der Außenseite des Handstückes erstreckt.

Die vorgenannte Druckschrift beschreibt eine Möglichkeit, eine vom Benutzer des Handstückes gewünschte Drehzahl einzustellen, dagegen keine Maßnahmen für ein selbsttätiges Regeln der Drehzahl in Abhängigkeit von der Belastung.

In der US-PS 3 865 505, aus der die Merkmale des Oberbegriffs von Anspruch 1 bekannt sind, wird eine Regeleinrichtung für eine Dental-Turbine beschrieben, bei der im Zuleitungskanal der Antriebsdruckluft ein Ventil angeordnet ist, welches in Abhängigkeit vom Volumendurchsatz der Rückluft gesteuert wird. Sinkt durch ein äußeres Moment (bei Belastung) die Drehzahl der Turbine, so wird das Ventil im Zuleitungskanal geöffnet und dadurch ein größeres Luftvolumen zum Laufrad der Turbine geleitet. Die von der Rückluft abhängige Regelung des Zuluftstromes kann bei der bekannten Turbine auf verschiedene Weise erfolgen, u.a. über einen federbelasteten Schieber im Rückluftkanal, der das Ventil im Zuluftkanal steuert oder über eine im Rückluftkanal angeordnete Membran/Druckdose, die einen den Durchfluß in der Zuleitung steuernden Kolben verstellt. Mit dieser bekannten Regeleinrichtung kann die Drehzahl lastunabhängig konstant gehalten werden. Die Einrichtung ist u.a. mit dem Nachteil behaftet, daß zur Drosselung des gesamten Luftstromes relativ große Kräfte notwendig sind, die sich im Abluftkanal nur unter Einsatz von Volumen und Masse aufbringen lassen. Damit wird aber ein instabiles Regelverhalten der Turbine geschaffen. Des weiteren bedingt die bekannte Einrichtung einen relativ großen Aufbau innerhalb des Turbinenhandstückes, wodurch es zu Einbauproblemen kommen kann.

Die US-PS 3 578 872 beschreibt einen für den Antrieb chirurgischer Werkzeuge vorgesehenen zweistufigen Turbinenantrieb, bei dem Maßnahmen vorgesehen sind, um einerseits die maximale Drehzahl der Turbine zu begrenzen, um dadurch ein sogenanntes Überdrehen der Turbine zu vermeiden und andererseits, um das Drehmoment bei Belastung zu erhöhen.

Die hierzu vorgesehenen Maßnahmen bestehen aus einem mit dem Turbinenrad umlaufenden ringförmigen Teil, welches an der Peripherie abgewinkelt ist und so zwischen dem abgewinkelten Teil und der Ringnabe des Teils einen Raum bildet, in dem ein elastischer Ring eingelegt ist. Der elastische Ring dehnt sich mit zunehmender Drehzahl infolge der Zentrifugalkraft aus und verschließt dadurch stirnseitig des Teils vorgesehene Öffnungen, wodurch der Durchsatz der Treibluft verringert wird. Durch diese Maßnahmen kann der wirksame Querschnitt verändert und letztlich die maximale Drehzahl der Turbine begrenzt werden.

Die Einstellung bzw. Veränderung der Drehzahl erfolgt hier in bekannter Weise durch Veränderung des Volumens der zugeführten Luft mittels eines zusätzlichen, nicht dargestellten, von Hand betätigbaren Steuerventils.

Der im Anspruch 1 angegebenen Erfindung liegt die Aufgabe zugrunde, einen zahnärztlichen Turbinenantrieb anzugeben, der hinsichtlich der Maßnahmen für eine selbsttätige Drehzahlregelung in Abhängigkeit von Laständerungen gegenüber dem Stand der Technik einfacher aufgebaut ist, weniger Platz benötigt und eine hohe Zuverlässigkeit gewährleistet.

Diese Aufgabe wird von der in Anspruch 1 definierten Vorrichtung gelöst.

Vorteilhafte Ausgestaltungen und Weiterbildungen der Erfindung ergeben sich aus den Unteransprüchen. Zwei Ausführungsbeispiele der Erfindung werden nachfolgend anhand der Zeichnung näher erläutert. Es zeigen:
- Fig. 1 bis 3: eine erste Ausführungsform eines erfindungsgemäßen Turbinenantriebes und
- Fig. 4 und 5: eine zweite Ausführungsform eines erfindungsgemäßen Turbinenantriebes.

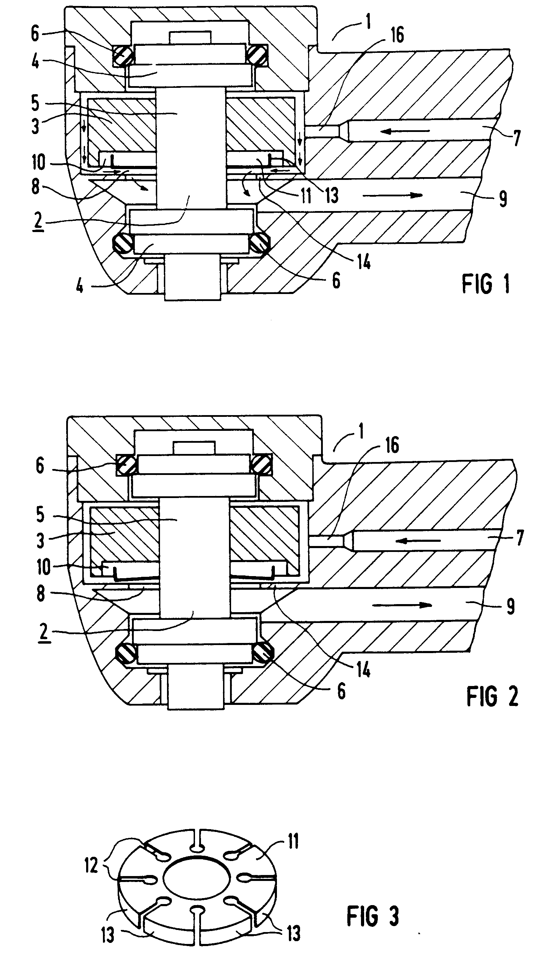

Die Fig. 1 zeigt einen Ausschnitt eines zahnärztlichen Turbinenhandstückes, bei dem im Kopfgehäuse 1 in bekannter Weise eine Turbinenantriebseinheit 2 gelagert ist. Die Antriebseinheit 2 enthält ein Laufrad 3, welches in bekannter Weise auf einer in Lagern 4 gelagerten Welle 5 aufgesetzt ist und am Umfang eine Vielzahl von Turbinenschaufeln aufweist, die nach dem bekannten Freistrahlprinzip über eine Düse 16 aus einem Zufuhrkanal 7 mit Druckluft beaufschlagt werden. Eine solche Turbineneinheit ist beispielsweise in DE-12 77 516 oder DE-12 38 311 offenbart. Die gesamte Antriebseinheit 2 ist mit O-Ringen 6 schwingungsgedämpft im Kopfgehäuse 1 fixiert. Die zugeführte Druckluft wird nach Durchströmen der Turbinenschaufeln des Laufrades über einen Abströmkanal 8 in einen Rückluftkanal 9 geleitet. Im Gegensatz zu bisher bekannten Konstruktionen mündet der Abströmkanal 8 in einen Abluftkanal, welcher sich außerhalb des durch Laufrad 3 und Laufradgehäuse begrenzten Turbinenraumes befindet. Dadurch ergibt sich der Vorteil, daß der bekannterweise auftretende Rücksaugeffekt bei auslaufender Turbine vermieden wird.

Das Laufrad 3 enthält, dem Abströmkanal 8 zugewandt, eine konzentrisch zur Welle verlaufende Ausnehmung 10, in der ein Stellmittel in Form einer topfförmigen federnden Scheibe 11 zur selbsttätigen Drehzahlregelung angeordnet ist. Die Scheibe 11 ist in Fig. 3 perspektivisch dargestellt. Sie weist eine Vielzahl von sternförmig gerichteten Schlitzen 12 auf, die der Scheibe eine besondere Elastizität geben. Die Scheibe 11 ist, wie aus Fig. 1 ersichtlich, auf der Welle 6 so aufgesetzt, daß der hochgezogene Rand 13 nach innen in die Ausnehmung greift. Die Federscheibe 11 begrenzt zusammen mit einer in der Fig. 1 mit 14 bezeichneten ringförmigen Gehäusewand den wirksamen Querschnitt, über den die Druckluft abströmen kann.

In Betrieb, also bei Rotation des Laufrades, wirkt auf die Scheibe 11 die Zentrifugalkraft, und zwar derart, daß sich die Scheibe mit dem freien Ende vom Laufrad weg biegt (Fig. 2). Dadurch verengt sich der Querschnitt (Spalt) zwischen Laufrad und Laufradgehäuse. Da der abströmende Luftstrom diesen Spalt passiert, kann durch geeignete Dimensionierung von Spalt und Scheibe 11 der Luftstrom gedrosselt und so eine erwünschte reduzierte Leerlaufdrehzahl eingestellt werden. Bei Belastung während einer Präparation sinkt die Drehzahl. Ein zu starker Abfall wird aber verhindert, da bei absinkender Drehzahl die Auslenkung der Scheibe zurückgeht, wodurch der Spalt und damit auch der durchgehende Luftstrom größer wird.

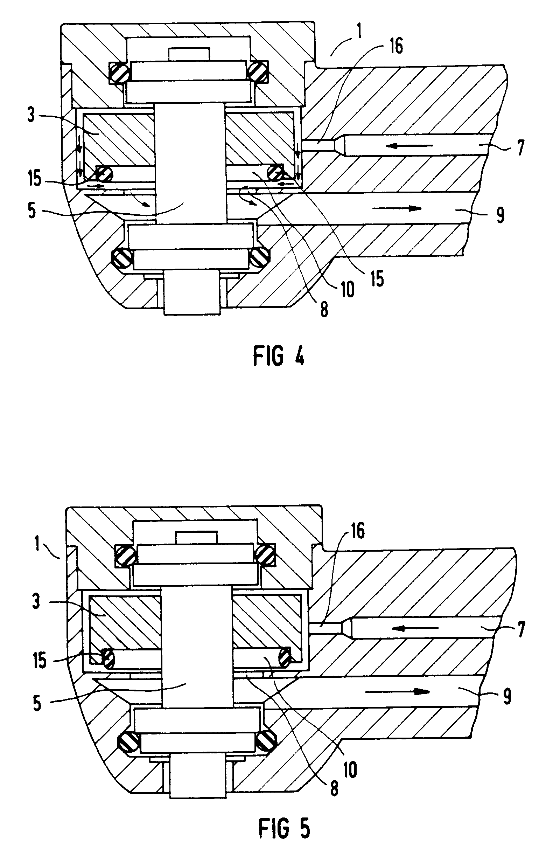

Die Fig. 4 und 5 zeigen eine zweite Ausführungsform. Das Stellelement ist hier ein elastischer O-Ring 15, dessen Elastizität so gewählt ist, daß sich seine Form und/oder Lage in der Ausnehmung durch die Wirkung der Zentrifugalkraft so ändert, daß bei hohen Drehzahlen der Querschnitt im Abströmkanal 8 verkleinert, bei zurückgehender Drehzahl dagegen vergrößert wird. Der O-Ring ist hierzu in der Ausnehmung 10 so eingelegt, daß er an die Außenwand der Aussparung gepreßt wird. Dabei verformt sich sein im Ruhezustand kreisförmiger Querschnitt (Fig. 4) zu einem Oval (Fig. 5), wodurch sich, wie bereits erwähnt, der Spalt zwischen Laufrad und Gehäuse verringert.

Die Stellmittel sind vorteilhafterweise nur an einer Stirnseite des Laufrades angeordnet; denkbar und im Rahmen der Erfindung liegt es, entsprechende Stellmittel auch an der gegenüberliegenden Stirnseite anzuordnen.

## Patentansprüche

1. Zahnärztlicher Turbinenantrieb enthaltend ein in Lagern (4) geführtes Laufrad (3), welches am Umfang eine Vielzahl von Turbinenschaufeln aufweist, die nach dem bekannten Freistrahlprinzip über eine Düse (16) mit Druckluft beaufschlagbar sind und ein im Strömungsweg der Abluft angeordnetes Stellmittel zur Regelung der Turbinendrehzahl, **dadurch gekennzeichnet,** daß das Stellmittel (11,15) im Abströmkanal (8) zwischen Laufrad (3) und Laufradgehäuse (14) am rotierenden Teil des Laufrades (3) angeordnet ist, wobei der Querschnitt des Abströmkanals (8) von dem Stellmittel (11,15) und einer ringförmigen Gehäusewandung (14) begrenzt ist und das Stellmittel (11,15) so ausgebildet ist daß es bei Rotation des Laufrades seine Form und/oder Lage infolge Zentrifugalkraft derart ändert, daß der wirksame Querschnitt des Abströmkanals (8) mit steigender Drehzahl abnimmt und mit sinkender Drehzahl zunimmt.

2. Turbinenantrieb nach Anspruch 1, **dadurch gekennzeichnet,** daß das Stellmittel (11, 15) in einer stirnseitigen Ausnehmung (10) des Laufrades (3) angeordnet ist.

3. Turbinenantrieb nach Anspruch 1 , **dadurch gekennzeichnet,** daß als Stellmittel eine topfförmig ausgebildete Federscheibe (11) vorgesehen ist, die mit ihrem abgewinkelten Rand (13) dem Laufrad (3) zugewandt in der Ausnehmung (10) des Laufrades (3) angeordnet ist.

4. Turbinenantrieb nach Anspruch 3, **dadurch gekennzeichnet,** daß die Federscheibe (11) durch eine Vielzahl von Schlitzen (12) federelastische Segmente bildet.

5. Turbinenantrieb nach Anspruch 4, **dadurch gekennzeichnet,** daß die Schlitze (12) sternförmig angeordnet sind.

6. Turbinenantrieb nach Anspruch 1 oder 2 , **dadurch gekennzeichnet,** daß als Stellmittel ein konzentrisch zur Achse des Laufrades (3) in der Ausnehmung (10) angeordneter, elastisch verformbarer Ring (O-Ring 15) vorgesehen ist, dessen äußere Stirnfläche zusammen mit einer Gehäusewandung (14) den Abströmquerschnitt begrenzt, wobei die Elastizität des Ringes so gewählt ist, daß sich seine Form und/oder Lage in der Ausnehmung (10) durch die Zentrifugalkraft im Sinne der Änderung der Strömungsquerschnitte verändern kann.

7. Turbinenantrieb nach einem der Ansprüche 1 bis 6 **dadurch gekennzeichnet,** daß der Abströmkanal (8) in einen außerhalb des durch das Laufrad (3) und das Laufradgehäuse begrenzten Turbinenraumes angeordneten Abluftkanal (9) mündet.

## Claims

1. Dental turbine drive containing a rotor disc (3) that is guided in bearings (4) and which, on its circumference, has a plurality of turbine blades to which compressed air can be applied according to the known free-jet principle by way of a nozzle (16), and containing a means of adjustment, which is arranged in the flow path of the exhaust air, for the control of the turbine speed, characterised in that the means of adjustment (11, 15) is arranged in the outflow channel (8) between the rotor disc (3) and the rotor disc housing (14) on the rotating portion of the rotor disc (3), with the cross section of the outflow channel (8) being restricted by the means of adjustment (11, 15) and an annular housing wall (14) and with the means of adjustment (11, 15) being formed in such a way that it changes its shape and/or position, when the rotor disc rotates, in consequence of centrifugal force in such a way that the effective cross section of the outflow channel (8) decreases with rising speed and increases with falling speed.

2. Turbine drive according to claim 1, characterised in that the means of adjustment (11, 15) is arranged in a recess (10) on the face of the rotor disc (3).

3. Turbine drive according to claim 1, characterised in that provided as a means of adjustment there is a resilient disc (11) that is formed in a cup-shaped manner and which is arranged with its angled edge (13) facing the rotor disc (3) in the recess (10) of the rotor disc (3).

4. Turbine drive according to claim 3, characterised in that the resilient disc (11) forms spring-elastic segments by means of a plurality of slots (12).

5. Turbine drive according to claim 4, characterised in that the slots (12) are arranged in the shape of a star.

6. Turbine drive according to claim 1 or 2, characterised in that provided as a means of adjustment there is an elastically deformable ring (O-ring 15) that is arranged so as to be concentric to the axis of the rotor disc (3) in the recess (10) and the outer face of which together with a housing wall (14) restricts the outflow cross section, with the selected elasticity of the ring being such that its shape and/or position in the recess (10) can be changed as a result of the centrifugal force for the purposes of varying the flow cross sections.

7. Turbine drive according to one of the claims 1 to 6, characterised in that the outflow channel (8) runs into an exhaust air channel (9) which is arranged outside the turbine chamber which is delimited by the rotor disc (3) and the rotor disc housing.

## Revendications

1. Moteur à turbine de dentisterie comprenant une roue mobile (3) sur paliers (4), qui comporte sur son pourtour une multiplicité d'aubes de turbine, qui peuvent être soumises suivant le principe connu du jet libre par l'intermédiaire d'une buse (16) à de l'air comprimé, et un moyen de réglage prévu dans la voie d'écoulement de l'air sortant pour régler la vitesse de rotation de la turbine, caractérisé en ce que le moyen (11, 15) de réglage est disposé dans le canal (8) d'évacuation entre la roue (3) mobile et le boîtier (14) de la roue mobile sur la partie rotative de la roue mobile (3), la section transversale du canal (8) d'évacuation étant limitée par le moyen (11, 15) de réglage et par une paroi (14) de boîtier annulaire et le moyen (11, 15) de réglage étant formé de sorte à ce qu'il change de forme et/ou de position à cause de la force centrifuge lors de la rotation de la roue mobile, de telle sorte que la section transversale active du canal (8) d'évacuation diminue lorsque la vitesse de rotation augmente et augmente lorsque la vitesse de rotation diminue.

2. Moteur à turbine suivant la revendication 1, caractérisé en ce que le moyen (11, 15) de réglage est disposé dans un évidement (10) fronts de la roue mobile (3).

3. Moteur à turbine suivant la revendication 1, caractérisé en ce qu'il est prévu comme moyen de réglage un disque (11) élastique en forme de pot, qui est disposé dans l'évidement (10) de la roue mobile (3) en étant tourné par son bord (13) coudé vers la roue mobile (3).

4. Moteur à turbine suivant la revendication 3, caractérisé en ce que le disque (11) élastique est formé d'une multiplicité de fentes (12) de segments élastiques comme un ressort.

5. Moteur à turbine suivant la revendication 4, caractérisé en ce que les fentes (12) sont disposées en étoile.

6. Moteur à turbine suivant la revendication 1 ou 2, caractérisé en ce qu'il est prévu comme moyen de réglage un anneau (anneau 15 en O) pouvant être déformé de manière élastique, qui est disposé concentriquement à l'axe de la roue mobile (3) dans l'évidement (10) et dont la surface frontale extérieure délimite, conjointement avec une paroi (14) de boîtier, la section transversale d'évacuation, l'élasticité de l'anneau étant choisie de telle sorte que sa forme et/ou sa position dans l'évidement (10) puisse changer à cause de la force centrifuge en vue de la modification des sections transversales d'écoulement.

7. Moteur à turbine suivant l'une des revendications 1 à 6, caractérisé en ce que le canal (8) d'évacuation débouche dans un canal (9) d'évacuation prévu à l'extérieur de l'espace de la turbine délimité par la roue mobile (3) et par le boîtier de la roue mobile.
